Europäisches Patentamt

European Patent Office

Office européen des brevets

(11) Publication number: **0 070 711**
**B1**

## (12) EUROPEAN PATENT SPECIFICATION

(45) Date of publication of patent specification: **16.10.85**

(21) Application number: **82303753.6**

(22) Date of filing: **16.07.82**

(51) Int. Cl.⁴: **C 01 B 15/10**

(54) Process for preparing sodium percarbonate.

(30) Priority: **20.07.81 IT 2302881**

(43) Date of publication of application:
**26.01.83 Bulletin 83/04**

(45) Publication of the grant of the patent:
**16.10.85 Bulletin 85/42**

(84) Designated Contracting States:
**DE FR GB**

(56) References cited:
**DE-A-2 631 917**
**DE-C- 425 598**
**US-A-3 870 783**

(73) Proprietor: **Montedison S.p.A.**
**Patents & Licensing Dept. Foro Buonaparte, 31**
**P.O. Box 10528**
**I-20121 Milan (IT)**

(72) Inventor: **Condo, Antonino**
**P.zza Lodovica**
**4 Milan (IT)**
Inventor: **Bianchi, Gaetano**
**18, Via Europa San Donato Milanese**
**Milan (IT)**

(74) Representative: **Whalley, Kevin et al**
**Marks & Clerk 57/60 Lincoln's Inn Fields**
**London WC2A 3LS (GB)**

Courier Press, Leamington Spa, England.

## Description

The present invention relates to a process for preparing sodium percarbonate, $2Na_2CO_3 \cdot 3H_2O_2$. $2Na_2CO_3 \cdot 3H_2O_2$.

As is known, sodium percarbonate may be prepared by reacting, at ambient pressure, sodium carbonate with a hydrogen peroxide solution. The reaction heat is removed from the reactor by outside cooling in order to prevent the temperature from rising, which could result in decomposition of the product. The product is then dried.

According to this process, the hydrogen peroxide solution must be fed slowly and gradually to the reactor containing sodium carbonate in order to avoid overheating of the product. As a consequence, the reaction times are long. Furthermore it is necessary to use concentrated hydrogen peroxide to minimize product decomposition phenomena, the product stability decreasing as the water amount increases. Moreover, the resulting product possesses a rather high brittleness.

Also, Federal Republic of Germany Specification No. DE—A1—2631917 discloses a wet method for preparing sodium percarbonate, utilizing an aqueous solution of both reagents, sodium carbonate and hydrogen peroxide, and the produced sodium percarbonate crystallizes from the solution. In the process according to DE—A1—2631917, the two reagents are fed simultaneously to the crystallization apparatus.

The present invention aims to provide a process for preparing sodium percarbonate which does not require either cooling or heating and permits an easy control of the temperature of the mass being reacted, whereby it is possible to employ short reaction times while obtaining a high reactor productivity. It is also desired to be able to utilize, optionally, a relatively dilute hydrogen peroxide solution. It is further desired to be able to obtain a product having a low brittleness, with a high content of active oxygen and a good stability.

The present invention provides a process for preparing sodium percarbonate, according to which sodium carbonate and an aqueous solution of hydrogen peroxide having a $H_2O_2$ concentration of from 40 to 80% by weight are reacted in the presence of a stabilizer of percarbonate, and the product is then dried. The stabilizer of the percarbonate is selected from magnesium salts, alkaline salts of polycarboxylic acids, sodium phosphonates, sodium hexametaphosphate, sodium pyrophosphate, sodium orthosilicate and sodium metasilicate. The process is characterized in that the reaction is conducted under a residual pressure not exceeding 60mm Hg (8000 Pa) and in that the residual pressure and the feeding rate of the hydrogen peroxide solution to the reactor containing solid sodium carbonate are adjusted so as to maintain the reaction mass at a temperature from 20 to 40°C.

The process according to the invention is generally accomplished under substantially adiabatic conditions since the reaction heat is eliminated, due to the reduced pressure, as evaporation heat of the water introduced into the reaction system through the hydrogen peroxide solution. After having fixed the temperature range in which the process will be operated, a reduced pressure is created such as to ensure the water evaporation at these temperatures, whereupon the hydrogen peroxide solution is introduced at such a rate as not to exceed the pre-assigned temperature values.

The reaction temperature ranges from 20 to 40°C. When operating below 20°C, the reaction times tend to be too long, while when the process is operated above 40°C sodium percarbonate tends to decompose. Preferably the process is operated at temperatures ranging from 25 to 35°C.

The residual pressure is preferably from 10 to 30 mm of Hg (4000 Pa).

The $H_2O_2$ concentration of the hydrogen peroxide solution ranges from 40 to 80% by weight. When the process is operated at an $H_2O_2$ concentration below 40%, the reaction times are too long and the product may decompose during the reaction step. Preferably, a hydrogen peroxide solution at a $H_2O_2$ concentration of from 60 to 70% is used.

The starting sodium carbonate may be, for example, anhydrous $Na_2CO_3$ or $Na_2CO_3 \cdot H_2O$. Preferably, anhydrous $Na_2CO_3$ is employed.

Drying of the product is generally carried out at temperatures ranging from 40 to 60°C. The drying may take place under static conditions, for example in a chamber through which a hot air stream is made to flow, or under dynamic conditions, for example in a fluidized bed.

As sodium percarbonate stabilizers there are used substances already known for such purposes selected from magnesium salts, alkaline salts of polycarboxylic acids, sodium phosphonates, sodium hexametaphosphate, sodium pyrophosphate, sodium orthosilicate and sodium metasilicate. Particularly satisfactory results are obtained by using magnesium silicate.

The amount of stabilizer may range, for example, from 0.5 to 5 g per mole of sodium percarbonate.

The molar ratio between $H_2O_2$ and $Na_2CO_3$ is generally from 0.8 to 1.8. However, if the process is operated with molar ratios lower than the stoichiometric value of 1.5, the active oxygen content of the product is rather low, although still sufficient to allow the utilization of the product in detergent formulations. If the process is operated with a molar ratio higher than 1.8, there is a considerable loss of $H_2O_2$. Preferably the process is operated with a molar ratio ranging from 1.6 to 1.7.

To obtain a good granulometry of percarbonate it is preferable to use a granular sodium carbonate having a small amount of product with a particle size exceeding 0.8 mm of mesh size of the screen and a small amount of product with a particle size below 0.16 mm of mesh size of the screen (the mesh size of the screen is the distance between two parallel and subsequent wires).

The reaction may be conducted in a mixer capable of ensuring intimate contact between the reagents, and which is vacuum tight.

After drying, the product is screened to remove the coarsest fraction (generally the one above 0.8 mm of mesh size of the screen) as well as the finest fraction (generally the one below 0.16 mm of mesh size of the screen). The coarsest fraction can be ground and recycled, along with the finest one, to the reaction step. This product recycle does not impair either the accomplishment of the process or the granulometry of the final product.

The resulting product exhibits a granular morphology with a smooth surface. Its content of active oxygen is generally equal to or higher than 14% by weight. The chemical yield, calculated on the basis of sodium carbonate, generally ranges from 85 to 95%.

The invention will be further described with reference to the following illustrative Examples.

Example 1

Starting from granular anhydrous 99.5% $Na_2CO_3$, the fraction having a particle size above 0.8 mm was separated by screening and, after grinding, was returned to the remaining portion of the product.

2,100 g of $Na_2CO_3$, 1,100 g of recycled sodium percarbonate and 53 g of colloidal magnesium silicate were introduced into a reactor. The reactor was a helical double-ribbon mixer, type "Ribbon Mixer". The reactor jacket was heated, at the beginning of the operation, by means of water circulating at 32—33°C, in order to avoid heat dispersion. Vacuum was applied and 1,764 g of hydrogen peroxide solution having an $H_2O_2$ concentration of 64% by weight were sucked into the equipment. The $H_2O_2/Na_2CO_3$ molar ratio was therefore equal to 1.69.

Feeding occurred in 25 minutes, under a residual pressure of about 20—25 mm of Hg (2666—3333 Pa). The reaction mass temperature was from 28 to 33°C. On completion of feeding, the mass was kept under stirring, always under reduced pressure, for a further 10 minutes.

The product, having a residual moisture of about 10%, was directly transferred into a fluidized bed drier where it was dried, by means of air heated to 44—46°C, for a time period of 15 minutes.

The dry product was screened on screens having a size of 0.8 mm and 0.15 mm. The coarse product was ground and recycled, along with the fine product, to a successive operative step.

By deducting the recycled percarbonate, 3,020 g of dry product were obtained. The operative yield, calculated on the basis of $Na_2CO_3$, was 90%.

The product exhibited the following characteristics:

| | |
|---|---|
| active oxygen titre | 14.1 % |
| sodium percarbonate titre | 92.2% |
| bulk density | 1.028 g/cm³ |
| brittleness | 6.8% |
| stability in dry conditions | 94.5%. |

Brittleness was determined on the fraction of 0.4—0.8 mm by the test of the European Laboratory Standard Practice Instructions No. 7/17050 of June 10, 1971.

Stability in dry conditions was determined after an eighteen-day residence time in an oven at 37°C, at a relative humidity of 70%. The product granules were round, smooth and compact.

The product granulometry as follows:

| | |
|---|---|
| above 0.8 mm of mesh size | 3.6% |
| from 0.4 to 0.8 mm | 60.2% |
| from 0.2 to 0.4 mm | 22.2% |
| from 0.16 to 0.2 mm | 12.0% |
| below 0.16 mm | 2.0%. |

Example 2

The procedure described in Example 1 was followed, except for the following.

— sodium carbonate was used without carrying out any screening and grinding of the coarse product;
— the hydrogen peroxide titre was 69.5% of $H_2O_2$;
— the $H_2O_2/Na_2CO_3$ molar ratio was 1.66;
— the amount of recycled sodium percarbonate was 900 g;
— feeding of hydrogen peroxide occurred in 23 minutes;
— the residual pressure was 17—22 mm of Hg (2266—2933 Pa);
— the temperature of the reaction mass was from 23 to 32°C.

The yield calculated on the basis of $Na_2CO_3$ amounted to 88.2%. The product obtained had an active oxygen titre of 14.0% and a brittleness of 6.6%.

Example 3

The procedure described in Example 1 was followed, except for the following:

— the hydrogen peroxide titre was 59.6% of $H_2O_2$;
— the $H_2O_2/Na_2CO_3$ molar ratio was 1.77;
— the amount of recycled sodium percarbonate was 900 g;

— feeding of hydrogen peroxide occurred in 40 minutes;

— the residual pressure was 10—20 mm of Hg (1333—2666 Pa);

— the temperature of the reaction mass was from 24 to 29°C.

The yield calculated on the basis of $Na_2CO_3$ amounted to 94.6%. The product obtained had an active oxygen titre of 14.6% and a brittleness of 12%.

**Claims**

1. A process for preparing sodium percarbonate by reacting, in the presence of a stabilizer of the percarbonate, sodium carbonate and an hydrogen peroxide aqueous solution having a $H_2O_2$ concentration of from 40 to 80% by weight, and by drying the product, wherein the said stabilizer of the percarbonate is selected from magnesium salts, alkaline salts of polycarboxylic acids, sodium phosphonates, sodium hexametaphosphate, sodium pyrophosphate, sodium orthosilicate and sodium metasilicate, characterized in that the reaction is conducted under a residual pressure not exceeding 60 mm Hg (8000 pa) and in that the residual pressure as well as the feed rate of the hydrogen peroxide solution to the reactor containing solid sodium carbonate are adjusted so as to maintain the reaction mass at a temperature from 20° to 40°C.

2. A process as claimed in claim 1, characterized in that the reaction mass is maintained at a temperature from 25° to 35°C.

3. A process as claimed in claim 1 or 2, characterized in that anhydrous sodium carbonate is used.

4. A process as claimed in any of claims 1 to 3, characterized in that the $H_2O_2$ concentration of the hydrogen peroxide solution from 60 to 70%.

5. A process as claimed in any of claims 1 to 4, characterized in that $H_2O_2/Na_2CO_3$ molar ratio is from 1.6 to 1.7.

6. A process as claimed in any of claims 1 to 5, characterized in that the stabilizer of sodium percarbonate is magnesium silicate.

**Patentansprüche**

1. Verfahren zur Herstellung von Natriumpercarbonat, bei dem man in Anwesenheit eines Stabilisators für das Percarbonat Natriumcarbonat und eine wässrige Lösung aus Wasserstoffperoxid mit einer $H_2O_2$ Konzentration von 40 bis 80 Gew.-% umsetzt und das Produkt trocknet, wobei der Stabilisator für das Percarbonat ausgewählt ist aus Magnesiumsalzen, Alkalisalzen von Polycarbonsäuren, Natriumphosphonaten, Natriumhexametaphosphat, Natriumpyrophosphat, Natriumorthosilicat und Natriummetasilicat, dadurch gekennzeichnet, daß die Umsetzung unter einem Restdruck nicht über 60 mm Hg (8000 pa) erfolgt und daß der Restdruck sowie die Einführungsgeschwindigkeit der Wasserstoffperoxidlösung in den das feste Natriumcarbonat enthaltenden Reaktor so eingestellt werden, daß die Reaktionsmasse auf einer Temperatur von 20 bis 40°C gehalten wird.

2. Verfahren nach Anspruch 1, dadurch gekennzeichnet, daß die Reaktionsmasse auf einer Temperatur von 25 bis 35°C gehalten wird.

3. Verfahren nach Anspruch 1 oder 2, dadurch gekennzeichnet, daß wasserfreies Natriumcarbonat verwendet wird.

4. Verfahren nach einem der Ansprüche 1 bis 3, dadurch gekennzeichnet, daß die $H_2O_2$ Konzentration der Wasserstoffperoxidlösung 60 bis 70% beträgt.

5. Verfahren nach einem der Ansprüche 1 bis 4, dadurch gekennzeichnet, daß das molare $H_2O_2/Na_2CO_3$ Verhältnis von 1,6 bis 1,7 beträgt.

6. Verfahren nach einem der Ansprüche 1 bis 5, dadurch gekennzeichnet, daß der Stabilisator für das Natriumpercarbonat Magnesiumsilicat ist.

**Revendications**

1. Un procédé de préparation de percarbonate de sodium par réaction, en présence d'un stabilisant du percarbonate, de carbonate de sodium et d'une solution aqueuse de péroxyde d'hydrogène présentant une concentration en $H_2O_2$ comprise entre 40 et 80% en poids, et par séchage du produit, dans lequel ledit stabilisant du percarbonate est choisi parmi les sels de magnésium, les sels alcalins d'acides polycarboxyliques, les phosphonates de sodium, l'hexamétaphosphate de sodium, de pyrophosphate de sodium, l'orthosilicate de sodium et le métasilicate de sodium, caractérisé en ce que la réaction est effectuée sur une pression résiduaire ne dépassant pas 60 mm de mercure (8.000 Pa) et en ce que la pression résiduaire ainsi que le taux d'introduction de la solution de péroxyde d'hydrogène dans le réacteur contenant le carbonate de sodium solide sont réglés de façon à ce que la masse réactionnelle soit maintenué à une température comprise entre 20 et 40°C.

2. Un procédé tel que revendiqué dans la revendication 1, caractérisé en ce que la masse réactionnelle est maintenue à une température comprise entre 25 et 35°C.

3. Un procédé ainsi que revendiqué dans la revendication 1 ou 2, caractérisé en ce que l'on emploie du carbonate de sodium anhydre.

4. Un procédé ainsi que revendiqué dans l'une quelconque des revendications 1 à 3, caractérisé en ce que la concentration en $H_2O_2$ de la solution de péroxyde d'hydrogène est comprise entre 60 et 70%.

5. Un procédé ainsi que revendiqué dans l'une quelconque des revendications 1 à 4, caractérisé en ce que le rapport molaire $H_2O_2/Na_2CO_3$ est comprise entre 1,6 et 1,7.

6. Un procédé ainsi que revendiqué dans l'une quelconque des revendications 1 à 5, caractérisé en ce que le stabilisant du percarbonate de sodium est le silicate de magnésium.